# EUROPÄISCHE PATENTANMELDUNG

(11) **EP 4 047 625 A1**
(43) Veröffentlichungstag der Anmeldung: **24.08.2022**
(21) Anmeldenummer: 21158486.7
(22) Anmeldetag: 22.02.2021
(51) Int. Cl.: H01B 13/14, H02K 3/30, H01B 3/30, H01B 3/40, H01B 3/42, H01B 3/46

(54) **ISOLATIONSSYSTEM FÜR ELEKTRISCHE ROTIERENDE MASCHINEN, VERWENDUNG EINES MATERIALGEMISCHES UND ELEKTRISCHE ROTIERENDE MASCHINE**

(71) Anmelder: Siemens Aktiengesellschaft, 80333 München (DE); Siemens Mobility GmbH, 81739 München (DE)
(72) Erfinder: Lang, Steffen, 91352 Hallerndorf (DE); Maleika, Marek, 90766 Fürth (DE); Müller, Niels, 90425 Nürnberg (DE); Schemmel, Florian, 90455 Nürnberg (DE)

(57) **Zusammenfassung**

Die Erfindung betrifft ein Isolationssystem für eine elektrische rotierende Maschine, insbesondere Elektromotor und/oder Generator, sowie die Verwendung eines Materialgemisches und eine elektrische rotierende Maschine. Durch die vorliegende Erfindung wird erstmals eine Hauptisolation für ein Isolationssystem für Spulen in Statornuten von elektrischen rotierenden Maschinen vorgeschlagen, die mittels Spritzguss herstellbar ist. Dazu wird ein Materialgemisch angegeben, welches im Spritzguss verarbeitbar ist und als spritzgegossene Hauptisolation in Tests thermische Stabilität der Hauptisolation von Spulen in den Statornuten bis zu Betriebstemperaturen von 200°C oder sogar 220°C - je nach spritzgegossenem Materialgemisch- bewiesen hat.

## Beschreibung

Die Erfindung betrifft ein Isolationssystem für eine elektrische rotierende Maschine, insbesondere Elektromotor und/oder Generator, sowie die Verwendung eines Materialgemisches und eine elektrische rotierende Maschine.

Bekannt sind elektrische rotierende Maschinen im Nieder- und Hochspannungsbereich wie Elektromotoren und elektrische Generatoren. Diese Maschinen zeichnen sich durch eine Vielzahl verschiedener Bauformen und Einsatzbereiche aus. Sie werden in sämtlichen Bereichen der Technik, der Industrie, des Alltags, des Verkehrswesens, der Medizin und anderen Gebieten verwendet. Der Leistungsbereich elektrischer Maschinen erstreckt sich von Größenordnungen unterhalb von einem Mikrowatt z.B. in der Mikrosystemtechnik bis hinaus über ein Gigawatt, also Tausendmal eine Million Watt, wie beispielsweise im Kraftwerksbereich. Ab etwa 700 V Bemessungsspannung werden die Traktions- und Antriebsmotoren im Fahrzeugbereich, Schienenfahrzeugbereich, etc. betrieben.

Allen rotierenden elektrischen Maschinen gemeinsam sind Spulen, die vom elektrischen Strom durchflossen werden. Zur elektrischen Isolation der stromdurchflossenen Teile gegeneinander und gegenüber der äußeren Umgebung weisen elektrische Maschinen Isolationssysteme, die zumindest eine Hauptisolation und gegebenenfalls noch Glimmschutz aufweisen, auf.

Bei elektrischen rotierenden Maschinen ab einer Bemessungsspannung von etwa 700 V liegen Spulen aus gegeneinander beispielsweise über Bewicklung und/oder Drahtlack isolierte Teilleiter vor. Diese werden aus Rohlingen, wie einem Spulenfisch durch Ziehen und Verdrehen so geformt, dass sie in die Nuten eines Stator-Grundkörpers, also in das Blechpaket des Elektromotors eingelegt werden können. Die Spulen untereinander sind über so genannte Wickelköpfe verbunden und durch entsprechende Anschlüsse kontaktiert.

Die stromführenden Teilleiter, die die Spule bilden, sind gegeneinander, gegenüber dem Blechpaket und schließlich auch gegenüber der Umgebung durch ein Isolationssystem isoliert. Das Isolationssystem umfasst regelmäßig die Hauptisolation, die einen reinen Isolator darstellt und gegebenenfalls (ab einer Bemessungsspannung von etwa 4.000 V) das Glimmschutzsystem, das die Komponenten Außenglimmschutz und gegebenenfalls (ab einer Bemessungsspannung von etwa 6.000 V) den Endenglimmschutz, je nach Art der Maschine, umfasst.

Weitestgehend ist die spannungsführende Spule dabei als Hauptisolation durch polymerbasierte Werkstoffe vom geerdeten Blechpaket isoliert. Um ein Maximum an Leistung aus der Maschine herauszuholen, wird sie bei höchstmöglichen Stromdichten betrieben, wodurch aber auch nennenswerte Verluste in Form von Hitze entstehen.

Bei großen Elektromotoren ist die übliche Betriebstemperatur maximal 155°C. Für diese Betriebstemperaturen ist es bekannt, ein Isolationssystem aus Glimmerband und epoxidbasierten duroplastischen Kunststoffen einzusetzen. Der Motor ist so ausgelegt, dass die maximale Aufheizung 155°C nicht oder nur unwesentlich überschreitet.

Um die Leistungsdichte einer solchen Maschine zu erhöhen wird entweder die Spannung erhöht oder die Stromstärke. Würde die Spannung erhöht werden, müsste dauerhaft eine höhere Feldstärke über das Isolationssystem abgebaut werden. Dafür sind die herkömmlich bekannten Isolationssysteme auf Epoxidbasis nicht ausgelegt.

Wird die Stromstärke erhöht, dann wird das Isolationssystem thermisch stärker belastet, zumindest kurzzeitig sogar auf über 200°C. Dafür werden nach dem Stand der Technik in Isolationssystemen Materialien mit höheren Temperaturindices eingesetzt, wie zum Beispiel auf Basis von mAramid, Polyimid und Polyesterimid.

Diese Werkstoffe limitieren jedoch aufgrund ihrer Eigenschaften das Wicklungsdesign: Polyimide werden aktuell als Bänder oder Nuteinleger eingesetzt und sind daher wegen ihrer geometrischen Eigenschaften begrenzt einsetzbar, was die Geometrie von Spulen für Traktionsmotoren einschränkt. mAramid ist in den elektrischen Festigkeiten sehr begrenzt einsetzbar, zeigt aber hervorragende mechanische Eigenschaften.

Einige Elektromotoren, wie z.B. Traktionsmotoren werden bei Temperaturen weit über 155°C bis hin zu 200°C betrieben. Die dafür nötigen und als Isolationsmaterial für die Hauptisolation verfügbaren Hochleistungspolymere sind aufgrund des begrenzten Angebots auf wenige Polymertypen begrenzt, die alle unterschiedliche Vor- und Nachteile haben. Die Polymerart bei Flächenisolierstoffen und Isolierbändern für Traktionsmotoren begrenzt sich aufgrund unterschiedlichster Anforderungen bislang im Wesentlichen auf mAramid und Polyimid. Die Flächenisolierstoffe mit mAramid werden in einem Vacuum Pressure Impregnating -VPI-Prozess mit Polyetherimid - PEI - imprägniert, um eine möglichst hohe Porenfreiheit zu gewährleisten und um die Wicklung mechanisch fest in der Nut zu fixieren.

Es besteht der Bedarf, Isolationssysteme aus anderen Materialien als mAramid zu schaffen, die den thermischen Anforderungen bei Temperatur Index 180°C, 200°C und/oder sogar 220°C standhalten.

Aufgabe der vorliegenden Erfindung ist daher die Schaffung von Isolationssystemen, die thermischen und mechanischen Anforderungen von Betriebstemperaturen über 155°C sowie den elektrischen Belastungen dauerhaft standhalten, damit die Leistungsdichte der bekannten Elektromotoren erhöht werden kann.

Diese Aufgabe wird durch den Gegenstand der vorliegenden Erfindung, wie er in der Beschreibung, der Figur und den Ansprüchen offenbart wird, gelöst.

Deshalb ist Gegenstand der vorliegenden Erfindung ein Isolationssystem für eine rotierende elektrische Maschine, einen Stator mit Nuten und einen Rotor umfassend, wobei stromführende Teilleiter, die in Form eines definierten Teilleiterverbunds in vorgegebener Geometrie in den Nuten des Stators eingelegt sind, gegeneinander isoliert jeweils eine Spule bilden, die eine Hauptisolation hat, wobei die Hauptisolation ein Materialgemisch mit einem Copolymer umfasst, das zumindest zum Teil mittels Spritzguss aufgebracht und/oder hergestellt ist.
Außerdem ist Gegenstand der Erfindung die Verwendung eines Materialgemisches im Spritzgussverfahren zur Herstellung der Hauptisolation einer Spule für eine elektrische rotierende Maschine. Schließlich ist Gegenstand der Erfindung eine elektrische rotierende Maschine einen Rotor und einen Stator und zumindest eine in eine Nut eingelegte Spule umfassend, wobei die Spule zumindest teilweise mit einer im Spritzgussverfahren hergestellten Hauptisolation überzogen ist.

Als "über Spritzgussverfahren aufgebracht und/oder hergestellt" wird im Folgenden eine Hauptisolation einer Spule dann bezeichnet, wenn zumindest Teile der Spule durch Einlegen in ein Spritzgusswerkzeug und anschließende Spritzgussbehandlung mit dem Materialgemisch zur Herstellung einer Hauptisolation überzogen werden. Insbesondere sind die betroffenen Teile die geraden Teile der Spule, also die Bereiche, die den aktiven Teil der Spule ausbilden oder anders formuliert, die Bereiche der Spule, die in die Nuten des Stators eingelegt werden.

Im Spritzgussverfahren wird beispielsweise eine, mehrere Teilleiter umfassende Spule mit einem Materialgemisch aus einem oder mehreren Polymeren, einem oder mehreren Copolymeren und/oder einem oder mehreren Blends in einer vorgegebenen Dicke beschichtet und damit isoliert. Insbesondere kann das Materialgemisch einen Blend aus Thermoplasten und Polymeren und/oder Copolymeren enthalten.

Die Spule liegt bei der Herstellung zunächst in Form von so genannten Spulenfischen vor, das ist die noch nicht für das Einlegen in die Nut gezogene Spule, sondern ein definierter Teilleiterverbund, beispielsweise 10 Teilleiter in zwei Reihen, die genau in die Nut passen, umfassend wobei die Teilleiter gegeneinander durch Teilleiterisolation isoliert und definiert angeordnet sind. , Di Packung der gegeneinander isolierten Teilleiter bildet bei größtmöglicher Packungsdichte für die Teilleiter eine in die Nut passende Form. Dieser Teilleiterverbund stellt dann eine Schlaufe dar und bildet in mehreren Windungen oder Wicklungen die Spule, die jeweils endseitig kontaktierbar ist.

Bevorzugt wird zur Herstellung der Hauptisolation die Spule in Form des Spulenfisches, zwei lange gerade Teilstücke zeigend, in das Werkzeug einer Spritzgussmaschine eingelegt, und dort mit einer definierten Isolationsdicke isoliert. So wird die Hauptisolation der Spule hergestellt. Das Ziehen der Spulen zum Einlegen in die Statornut erfolgt bevorzugt an der bereits isolierten Spule.

Andererseits kann auch die fertig gezogene Spule mit Teilleitern über Spritzgussverfahren isoliert werden.

So sind sowohl der Spulen-Rohling, der Spulenfisch, als auch die fertig gezogene Spule grundsätzlich geeignet, um in ein Spritzgusswerkzeug, eine Form und eine Kavität umfassend, eingelegt zu werden.

Im Spritzgussverfahren wird ein -bevorzugt nicht gebogener - Teil einer Spule mit einem Kunststoff in definierter Dicke isoliert. Das spritzgegossene Materialgemisch der Hauptisolation ist dabei bevorzugt Thermoplast-haltig, vor allem deshalb, weil Thermoplasten schmelzbar sind ohne dabei thermisch zu degradieren und eine niedrige Schmelzviskosität aufweisen, die für eine idealerweise porenfreie Isolierung der Spulen bzw. Spulenteile förderlich ist.

Insbesondere sind als spritzgegossenes Materialgemisch auch Blends aus Thermoplasten mit weiteren Polymeren geeignet. In Tests haben sich insbesondere Blends verschiedener Zusammensetzung aus Hochtemperatur-Thermoplasten mit einem Copolymer aus Polyetherimid und Siloxan erfolgreich über Spritzgussverfahren als Hauptisolation auf die Spule aufbringen lassen.

Nach einer besonders vorteilhaften Ausführungsform der Erfindung hat sich als spritzgegossenes Materialgemisch ein Blend aus einem oder mehreren Hochtemperatur-Thermoplasten ausgewählt aus der Gruppe umfassend:
- Polyetherimid
- Polyaryletherketone - PEEK, PEK, PEKK, PEEEK, PEEKK, PEKEKK usw.
- Polysulfon -PSU-,
- Polyphenylensulfid -PPS-,
- Polyethersulfon - PES- und/oder
- Poly(oxy-1,4-phenylsulfonyl-1,4-phenyl) -PESUmit einem Copolymer aus zwei polymer vorliegenden Verbindungen, wie insbesondere ein Copolymer aus Polyetherimid und Siloxan, als geeignet erwiesen.

Als Copolymer hat insbesondere das Polyetherimid-Siloxan-Copolymeren ein enormes Potential als Isoliermaterial im Mittel- und Hochspannungsbereich hinsichtlich der Beständigkeit gegenüber thermischer Beanspruchung und elektrischen Entladungen bewiesen. Die Erweichungstemperatur des Copolymers allein als Flächenisolationswerkstoff liegt nur geringfügig oberhalb 170°C, so dass dieses Copolymer allein nicht als Hauptisolationsmaterial in einem Isolationssystem bei höheren Betriebstemperaturen, insbesondere bei Betriebstemperaturen oberhalb von 180°C einsetzbar ist. Im Blend mit einem Hochtemperatur-Thermoplasten jedoch zeigt dieses Copolymer keine Entmischung aber hervorragende Teilentladungsbeständigkeit und thermische Stabilität.

Durch einen Blend, also die Abmischung des Copolymers mit einem Hochtemperatur-Thermoplasten in einer Menge von beispielsweise 1 bis 90 Gew% - an Thermoplasten in der trockenen Substanz, die in die Spritzgussmaschine eingespeist wird, ergibt sich ein Material dass im Spritzgussverfahren verarbeitbar ist und in einem Motor, der bei einer BetriebsTemperatur von beispielsweise 170°C bis zu 250°C betrieben wird, problemlos einsetzbar ist.

Nach einer vorteilhaften Ausführungsform ist das Polyetherimid-Siloxan-Copolymer ein Block-Copolymer.

Der Anteil an Siloxan im Copolymer liegt im Bereich von 0,1Gew% bis 90Gew%, insbesondere bei 10Gew% bis 60Gew% und insbesondere bei 20Gew% bis 40Gew%, bezogen auf das Gesamtgewicht des Copolymers.

Nach einer vorteilhaften Ausführungsform liegt der atomare Anteil an Silizium-Atomen im Copolymer bei 0% bis 30% Atomprozent, insbesondere von 0 % bis 25 %, insbesondere bei 0% bis 15 (Atomprozent)%.

Nach einer vorteilhaften Ausführungsform der Erfindung ist das Polyetherimid-Siloxan-Copolymer ein Block-Copolymer der allgemeinen Formel (I) 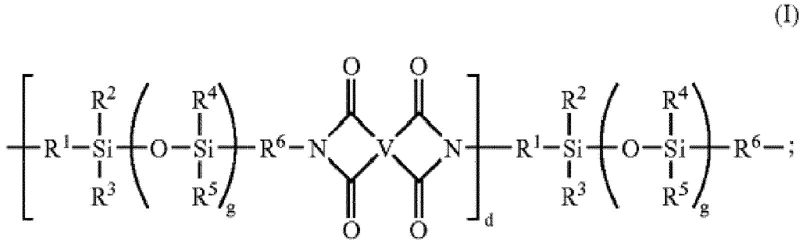 wobei
- **R**¹⁻⁶ gleich oder ungleich sind und ausgewählt aus der Gruppe der
   o substituierten oder unsubstituierten, gesättigten, ungesättigten oder aromatischen Monocyclen mit 5 bis 30 Kohlenstoffatomen,
   o substituierten oder unsubstituierten, gesättigten, ungesättigten oder aromatischen Polycyclen mit 5 bis 30 Kohlenstoffatomen,
   o substituierten oder unsubstituierten, gesättigten Kohlenwasserstoffen mit 1 bis 30 Kohlenstoffatomen,
   o substituierten oder unsubstituierten, ungesättigten Kohlenwasserstoffen mit 2 bis 30 Kohlenstoffatomen;
- **V** steht für eine 4-Valenzen habende Linkergruppe, ausgewählt aus der Gruppe der
   o substituierten oder unsubstituierten, gesättigten, ungesättigten oder aromatischen Monocyclen und Polycyclen mit 5 bis 50 Kohlenstoffatomen,
   o substituierten oder unsubstituierten, gesättigten Kohlenwasserstoffen mit 1 bis 30 Kohlenstoffatomen,
   o substituierten oder unsubstituierten, ungesättigten Kohlenwasserstoffen mit 2 bis 30 Kohlenstoffatomen,
   o sowie beliebig kombinierten Linkergruppen, die zumindest eine der vorgenannten Gruppen umfassen;
- **g** beträgt 1 bis 30 und
- **d** beträgt 2 bis 20.

Nach einer weiteren vorteilhaften Ausführungsform der Erfindung können in der thermoplastischen Spritzgussmasse ein oder mehrere Additive enthalten sein. Beispielsweise können ein oder mehrere Metalloxid(e), wie z.B. TiO₂ und/oder solche mit einer der folgenden Summenformeln NaₛAl₆Si₆O₂₄S₄ und/oder Na₆Al₆Si₆O₂₄S₂. Weitere Additive können Fe₂O₃ und/oder MnFe₂O₄ und/oder elektrisch nichtleitfähige Kohlenstoff basierte Füllstoffe, wie z.B. Industrieruß sein. Bei Bedarf können die Additiv-Partikel teilweise oder ganz, vollflächig oder teilflächig, mit einer SiO₂-Beschichtung ausgestattet vorliegen.

Diese Additive sind insbesondere auch oxidationshemmend, so dass die Wärmeklasse oder der Temperatur-Index eines damit hergestellten Flächenisolationswerkstoffes weiter erhöht werden kann.

Additive werden beispielsweise bei der Herstellung des Blends zugemischt und im Spritzguss verarbeitet. Weitere Additive, Verlaufshilfsmittel, Farbpigmente, Quarzpartikel und weiteres können dem Blend zugemischt werden.

Der Anteil an Additiv im spritzgegossenem Material liegt beispielsweise im Bereich zwischen 0,01 und 20 Gew%, insbesondere im Bereich zwischen 0,05 und 10 Gew% und besonders bevorzugt im Bereich zwischen 0,1 und 1 Gew%.

Als "Siloxan" wird vorliegend grundsätzlich eine Verbindung mit zumindest einer -Si-O-Si-Einheit verstanden, insbesondere solche, die im Polymer ein Si-O-Si-Rückgrat wie es in Siloxanen üblich ist, bilden. Beispielsweise sind ein Polydialkylsiloxan, wie das Polydimethylsiloxan, oder Polydiarylsiloxan, wie das Polydiphenylsiloxan einfache Formen eines Siloxans. Natürlich gibt es auch gemischte Formen von Siloxanen wie beispielsweise ein Polyarylalkylsiloxan.

Als Polyetherimid oder "PEI" wird der bekannte Thermoplast bezeichnet, der vielfältig einsetzbar ist, weil er hochtemperaturbeständig ist und als flammwidrig eingestuft wird. Dies insbesondere deshalb, weil er geringe Rauchentwicklung zeigt, wenn er dennoch mal brennt. PEI hat hohe Festigkeit, auch hohe elektrisch Durchschlagsfestigkeit, geringes Gewicht und ist gegen UV-Licht und Gammastrahlen beständig. Insbesondere ist PEI als "ULTEM^{®}" handelsüblich.

Das Polyetherimid wird gemäß einer vorteilhaften Ausführungsform der Erfindung einmal zur Bildung des Copolymers mit Siloxan eingesetzt, also die Monomere des Polyetherimids und die Monomere des Siloxans reagieren gemeinsam zu einem Copolymer.

Zum zweiten wird, unabhängig vom eingesetzten Copolymer, das Polyetherimid als Hochtemperatur-Thermoplast zur Abmischung des Copolymers zur Bildung des Blends eingesetzt.

Die Bildung des Blends oder auch Polyblend genannt erfolgt durch einfaches Mischen der beiden Komponenten Copolymer einerseits und Hochtemperatur-Thermoplast andererseits. Die Eigenschaften des Blends, insbesondere hinsichtlich Temperaturbeständigkeit entsprechen weder denen des Copolymers noch denen des Hochtemperatur-Thermoplasten. Ein Blend in diesem Sinn ist eine rein physikalische Mischung, es entstehen keine neuen chemischen Bindungen zwischen den Makromolekülen.

Insbesondere enthält das spritzgegossene Materialgemisch eine Abmischung in Form eines Blends aus dem oben genannten Polyetherimid-Siloxan-Polymer mit einem Hochtemperatur-Thermoplasten wie beispielsweise Polyetheretherketon (PEEK), Polyaryletherketon (PAEK), Polyphenylenether (PPE), Polyoxymethylen (POM), Perfluoralkoxy -Polymer (PFA), Polyvinylidenfluorid PVDF, Polyetherketon PEK, Polyetherketonketon PEKK, Polytetrafluorethylen PTFE, Polyphenylensulfon PPSU, Polyethersulfon PES, Polysulfon PSU, Poly(oxy-1,4-phenylsulfonyl-1,4-phenyl) PESU, Polyamidimid PAI, Polybenzimidazol PBI, Polyamidimid -PAI-, Polyetherketon -PEK-, Polyetheretherketon -PEEK -, Polyetherketonketon -PEKK-, Polysulfon -PSU- und/oder -PPSU-, Polyphenylensulfid -PPS-, Polyethersulfon - PES-, Poly(oxy-1,4-phenylsulfonyl-1,4-phenyl) -PESU-, Polyaryletherketon -PAEK- und/oder Polyetherimid PEI wird vorteilhafterweise über Spritzguss als Isolationsmaterial eingesetzt. Alle genannten Hochtemperatur-Thermoplaste können für sich und/oder in beliebigen Kombinationen und Mischungen, eingesetzt werden.

Die Hochtemperatur-Thermoplaste enthalten bevorzugt eine aromatische Grund-Struktur. Dadurch sind diese Verbindungen gegen Oxidation und gegen Radikalbildung länger beständig. Beides ist insbesondere bei geforderter Teilentladungsbeständigkeit sehr wichtig. Insbesondere ist auch die Kettensteifigkeit bei aromatischen Polymeren größer, so dass die Glasübergangstemperatur höher ist.

Ein Hochtemperatur-Thermoplast kann teilkristallin oder amorph vorliegen. Insbesondere bevorzugt sind hier die teilkristallinen Hochtemperatur-Thermoplaste als Blendpartner, weil diese besondere Stabilität gegenüber Oxidation, Teilentladungen und/oder Radikalbildung zeigen, sowie eine niedrige Schmelzviskosität aufweisen, was wiederum für eine porenfreie Isolation förderlich ist.

Durch die vorliegende Erfindung wird erstmals eine Hauptisolation für ein Isolationssystem für Spulen in Statornuten von elektrischen rotierenden Maschinen vorgeschlagen, die mittels Spritzguss herstellbar ist. Dazu wird ein Materialgemisch angegeben, welches im Spritzguss verarbeitbar ist und als spritzgegossene Hauptisolation in Tests thermische Stabilität der Hauptisolation von Spulen in den Statornuten bis zu Betriebstemperaturen von 200°C oder sogar 220°C - je nach spritzgegossenem Materialgemisch- bewiesen hat.

## Patentansprüche

1. Isolationssystem für eine rotierende elektrische Maschine, einen Stator mit Nuten und einen Rotor umfassend, wobei stromführende Teilleiter, die in Form eines definierten Teilleiterverbunds in vorgegebener Geometrie in den Nuten des Stators eingelegt sind, gegeneinander isoliert jeweils eine Spule bilden, die eine Hauptisolation hat, wobei die Hauptisolation ein Materialgemisch mit einem Copolymer umfasst, das zumindest zum Teil mittels Spritzguss aufgebracht und/oder hergestellt ist.

2. Isolationssystem nach Anspruch 1, wobei der Thermoplast im spritzgegossen Materialgemisch neben dem Copolymer noch ein Hochtemperatur-Thermoplast ist.

3. Isolationssystem nach einem der Ansprüche 1 oder 2, wobei das spritzgegossene Materialgemisch ein Blend aus dem Thermoplasten mit einem thermoplastischen Copolymer ist.

4. Isolationssystem nach Anspruch 3, wobei der Blend einen Anteil an thermoplastischen Copolymer gewichtsmäßig im Bereich zwischen 1 Gew% bis 90 Gew% umfasst.

5. Isolationssystem nach einem der vorstehenden Ansprüche 3 oder 4, wobei das Copolymer im Blend ein Block-Copolymer ist.

6. Isolationssystem nach einem der vorstehenden Ansprüche 3 bis 5, wobei das thermoplastische Copolymer ein Copolymer aus zwei Polymeren ist.

7. Isolationssystem nach einem der vorstehenden Ansprüche 3 bis 6, wobei das thermoplastische Copolymer Polyetherimid und Siloxan umfasst.

8. Isolationssystem nach einem der vorstehenden Ansprüche, wobei der Hochtemperatur-Thermoplast ausgewählt ist aus der Gruppe Polyetheretherketon (PEEK), Polyaryletherketon (PAEK), Polyphenylenether (PPE), Polyoxymethylen (POM), Perfluoralkoxy -Polymer (PFA), Polyvinylidenfluorid PVDF, Polyetherketon PEK, Polyetherketonketon PEKK, Polytetrafluorethylen PTFE, Polyphenylensulfon PPSU, Polyethersulfon PES, Polysulfon PSU, Poly(oxy-1,4-phenylsulfonyl-1,4-phenyl) PESU, Polyamidimid PAI, Polybenzimidazol PBI, Polyamidimid -PAI-, Polyetherketon -PEK-, Polyetherketonketon -PEKK-, Polysulfon - PSU-, Polyphenylensulfid -PPS-, Polyethersulfon - PES-, Po-ly(oxy-1,4-phenylsulfonyl-1,4-phenyl) -PESU-, und/oder Polyetherimid PEI, wobei die genannten Verbindungen einzeln und/oder in beliebigen Mischungen oder Blends im spritzgegossenem Materialgemisch vorliegen können.

9. Isolationssystem nach einem der vorstehenden Ansprüche, wobei der Anteil an Siloxan im Copolymer im Bereich von 0,1 Gew% bis 90 Gew% liegt.

10. Isolationssystem nach einem der vorstehenden Ansprüche, wobei das spritzgegossene Materialgemisch Additive umfasst.

11. Isolationssystem nach einem der vorstehenden Ansprüche, wobei als Additiv zumindest ein oxidationshemmendes Additiv vorliegt.

12. Isolationssystem nach einem der vorstehenden Ansprüche, wobei als Copolymer ein Block-Copolymer der allgemeinen Formel
**(I)** 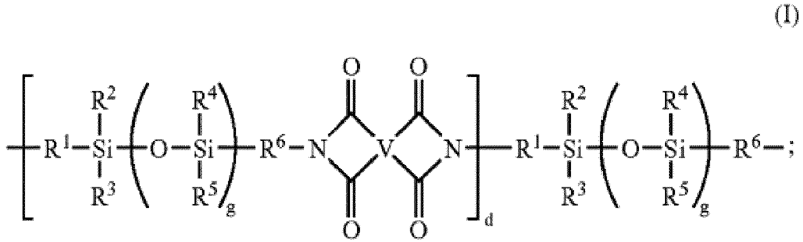 wobei
- **R**¹⁻⁶ gleich oder ungleich sind und ausgewählt aus der Gruppe der
o substituierten oder unsubstituierten, gesättigten, ungesättigten oder aromatischen Monocyclen mit 5 bis 30 Kohlenstoffatomen,
o substituierten oder unsubstituierten, gesättigten, ungesättigten oder aromatischen Polycyclen mit 5 bis 30 Kohlenstoffatomen,
o substituierten oder unsubstituierten, gesättigten Kohlenwasserstoffen mit 1 bis 30 Kohlenstoffatomen,
o substituierten oder unsubstituierten, ungesättigten Kohlenwasserstoffen mit 2 bis 30 Kohlenstoffatomen;
- **V** steht für eine 4-Valenzen habende Linkergruppe, ausgewählt aus der Gruppe der
o substituierten oder unsubstituierten, gesättigten, ungesättigten oder aromatischen Monocyclen und Polycyclen mit 5 bis 50 Kohlenstoffatomen,
o substituierten oder unsubstituierten, gesättigten Kohlenwasserstoffen mit 1 bis 30 Kohlenstoffatomen,
o substituierten oder unsubstituierten, ungesättigten Kohlenwasserstoffen mit 2 bis 30 Kohlenstoffatomen,
o sowie beliebig kombinierten Linkergruppen, die zumindest eine der vorgenannten Gruppen umfassen;
- **g** beträgt 1 bis 30 und
- **d** beträgt 2 bis 20
ist, vorliegt.

13. Isolationssystem nach einem der vorstehenden Ansprüche, wobei der Anteil an Additiv im spritzgegossenem Material zwischen 0,01 und 20 Gew% liegt.

14. Verwendung eines Materialgemisches nach einem der Ansprüche 2 bis 13 im Spritzgussverfahren.

15. Elektrische rotierende Maschine einen Rotor und einen Stator und zumindest eine in eine Nut eingelegte Spule umfassend, wobei die Spule zumindest teilweise mit einer im Spritzgussverfahren hergestellten Hauptisolation überzogen ist.
